# EUROPÄISCHE PATENTSCHRIFT

(11) **EP 3 338 018 B1**
(45) Veröffentlichungstag und Bekanntmachung des Hinweises auf die Patenterteilung: **07.10.2020**
(21) Anmeldenummer: 16724644.6
(22) Anmeldetag: 24.05.2016
(51) Int. Cl.: F16L 33/02, F16L 33/22

(54) **VERBINDUNGSANORDNUNG MIT PRESSRING**
CONNECTING ARRANGEMENT WITH PRESS RING
ENSEMBLE DE LIAISON AVEC BAGUE DE SERRAGE

(30) Priorität: 18.08.2015 DE 102015113626
(43) Veröffentlichungstag der Anmeldung: 27.06.2018
(73) Patentinhaber: NORMA Germany GmbH, 63277 Maintal (DE)
(72) Erfinder: STEINKAMP, Christoph, 63599 Biebergemünd (DE); BAUER, Andreas, 63785 Obernburg (DE); KULLIK, Sven, 63505 Langenselbold (DE)
(74) Vertreter: Patentanwälte Olbricht Buchhold Keulertz
(86) Internationale Anmeldenummer: PCT/EP2016/061708
(87) Internationale Veröffentlichungsnummer: WO 2017/028971

(56) Entgegenhaltungen:
- EP-A1- 0 204 445
- WO-A1-98/41790
- DE-A1- 19 602 907
- DE-A1- 19 752 806
- DE-U1-202008 008 554
- US-A- 2 319 024
- US-A- 3 938 237

## Beschreibung

Die Erfindung betrifft eine Verbindungsanordnung mit einem Anschlussstutzen und einem Schlauch, wobei der Schlauch mit einem Schlauchende auf den Stutzen aufgeschoben ist. Ferner betrifft die Erfindung einen Pressring für eine derartige Verbindungsanordnung.

Es ist bekannt, Schläuche beispielsweise an einen Anschlussstutzen eines Tanks mit ihrem Schlauchende aufzuschieben und mit einer Schlauchschelle, die im Bereich des Anschlussstutzens um das Schlauchende herumgelegt wird, zu sichern. Damit können relativ druck- und zugfeste Verbindungen erreicht werden. Allerdings erfordert das Anordnen einer Schlauchschelle zusätzliche Handgriffe und ist daher relativ aufwendig.

Bei Schläuchen mit relativ kleinem Durchmesser und nicht allzu hohem Innendruck durch das geförderte Medium ist es auch bekannt, Schlauchenden einfach auf den Anschlussstutzen aufzuschieben und ohne weitere Sicherung dort zu belassen. Dafür weist ein Außendurchmesser des Anschlussstutzens in der Regel ein Übermaß gegenüber einem Innendurchmesser des Schlauchendes auf, sodass das Schlauchende beim Aufschieben auf den Anschlussstutzen aufgeweitet wird und anschließend reibschlüssig hält. Um nun einen besonders sicheren Halt zu erhalten, ist es ferner bekannt, den Anschlussstutzen mit einer entsprechenden äußeren Strukturierung, wie beispielsweise einer Tannenbaumstruktur, zu versehen.

Bei größeren Innendurchmessern des Schlauches und/oder geringen Materialdicken des Schlauches sind die durch das Aufweiten des Schlauchendes beim Aufschieben auf den Anschlussstutzen erhältlichen radialen Spannkräfte jedoch nicht ausreichend, das Schlauchende sicher auf dem Anschlussstutzen zu halten.

Der Erfindung liegt nun die Aufgabe zugrunde, eine Verbindungsanordnung bereitzustellen, die mit geringem Aufwand einen sicheren Halt des Schlauchendes am Anschlussstutzen ermöglicht. Dabei soll die Verbindungsanordnung mit möglichst geringem Aufwand kostengünstig hergestellt werden und auch den Einsatz bei beengten Raumverhältnissen ermöglichen.

Erfindungsgemäß wird diese Aufgabe durch eine Verbindungsanordnung mit den Merkmalen des Anspruchs 1 gelöst. Vorteilhafte Ausgestaltungen finden sich in den Unteransprüchen.

Bei einer Verbindungsanordnung mit einem Anschlussstutzen und einem Schlauch, wobei der Schlauch mit einem Schlauchende auf den Stutzen aufgeschoben ist, ist erfindungsgemäß vorgesehen, dass am Schlauchende ein Pressring angeordnet ist, der den Schlauch außenseitig umgibt, wobei der Pressring reibschlüssig auf dem Schlauchende gehalten ist.

Der Pressring benötigt also keine zusätzlichen Befestigungs- und/oder Spannmittel, sondern ist ausschließlich reibschlüssig auf dem Schlauchende gehalten. Der reibschlüssige Halt ergibt sich dabei durch radial nach innen wirkende Spannkräfte, die sich durch radiales Aufweiten des Pressrings beim Aufschieben auf das Schlauchende und beim Aufschieben des Schlauchendes mit bereits montiertem Pressring auf den Anschlussstutzen ergeben. Das Schlauchende kann also mit bereits vormontiertem Pressring auf den Anschlussstutzen aufgeschoben werden, sodass mit wenigen Handgriffen bereits eine sichere Verbindung erhalten werden kann. Der Pressring verhindert dabei ein zu starkes Aufweiten des Schlauchendes und verstärkt gleichzeitig die radial nach innen wirkenden Spannkräfte. Damit sorgt er für einen sicheren Halt des Schlauchendes auf den Anschlussstutzen. Da kein direkter Zugriff auf den Pressring erfolgen muss, kann diese Verbindungsanordnung auch bei beengten Raumverhältnissen eingesetzt werden. Durch den Verzicht auf zusätzliche Verbindungen, beispielsweise eine Schweiß- oder Klebeverbindung zwischen dem Pressring und dem Schlauchende ergibt sich zum einen eine sehr einfache Fertigung, zum anderen eine hohe Variabilität bei der Materialauswahl für den Schlauch sowie für den Pressring. Durch den Pressring können Kombinationen von Anschlussstutzen und Schlauchende, die an sich eine schlechte Schnittstellenperformance haben, einfach aneinander gesichert werden. So können beispielsweise auch chemische beständige Materialien mit weniger guten mechanischen Eigenschaften problemlos eingesetzt werden. Mit Hilfe des Pressrings ist auch dann ein guter mechanischer Halt erreichbar.

Der Pressring ergibt eine gesteigerte Dichtwirkung zwischen dem Schlauchende und dem Anschlussstutzen, so dass auf zusätzliche Dichtelemente, wie beispielsweise ein Dichtring am Anschlussstutzen, verzichtet werden kann. Dies führt dann zu einer Bauraumeinsparung und einem weiter vereinfachten Aufbau.

Der Innendurchmesser des Pressrings ist im unbelasteten Zustand 0 bis 5 % kleiner als die Summe eines Außendurchmessers des Anschlussstutzens und einer doppelten Materialdicke des Schlauchs am Schlauchende. Dadurch wird sichergestellt, dass der Pressring bei montierter Verbindungsanordnung radial gedehnt werden muss und entsprechend radial nach innen wirkender Spannkräfte in die Verbindungsanordnung einbringt. Der Pressring ist also im Sinne einer Presspassung auf dem Schlauchende gehalten.

In einer bevorzugten Ausführungsform entspricht der Innendurchmesser des Pressrings einem Außendurchmesser des Schlauchendes vor dem Aufschieben auf den Anschlussstutzen, wobei ein Innendurchmesser des Schlauchs am Schlauchende kleiner als der maximale Außendurchmesser des Anschlussstutzens ist. Dadurch ist es relativ einfach möglich, den Pressring auf dem Schlauchende vorzumontieren, bevor das Schlauchende auf dem Anschlussstutzen aufgeschoben wird. Der Pressring kann mit geringem Krafteinsatz auf das Schlauchende aufgeschoben werden, wobei das Schlauchende zusammen mit dem Pressring dann beim Aufschieben auf den Anschlussstutzen aufgeweitet wird. Der Anschlussstutzen muss dafür nur einen geringfügig größeren Außendurchmesser aufweisen als der Innendurchmesser des Schlauchendes. Beispielsweise ist der Außendurchmesser des Anschlussstutzens 0 bis 5 % größer als ein Innendurchmesser des Schlauchendes.

Die erfindungsgemäße Lösung ist prinzipiell bei allen Schlauchdurchmessern zur Abzugskraft- und Drehmomenterhöhung einsetzbar. Auch bei kleinen Durchmessern können somit Materialien mit weniger guten Schnittstelleneigenschaften verwendet werden. Bevorzugterweise kann ein Innendurchmesser des Schlauchs mehr als 20 mm, insbesondere mehr als 30 mm betragen. Die Verbindungsanordnung ist damit auch für größere Durchflussmengen geeignet.

Der Pressring ist weniger elastisch ausgebildet als der Schlauch. Dies kann auf verschiedene Weise erreicht werden, beispielsweise durch entsprechende Materialwahl oder durch eine stärkere Materialdicke des Pressrings als des Schlauches. Wenn der Pressring weniger elastisch ausgebildet ist als der Schlauch, werden die wesentlichen Spannkräfte, die zum Halten des Schlauchendes auf dem Anschlussstutzen benötigt werden, durch den Pressring eingebracht. Gleichzeitig kann der Schlauch selbst sehr flexibel gestaltet werden, was für viele Anwendungszwecke vorteilhaft ist.

Die Breite des Pressrings entspricht der Eindringtiefe des Stutzens in das Schlauchende. Es ergibt sich somit eine bestmögliche Überdeckung, die zu einem sicheren Halt beiträgt.

In einer bevorzugten Ausgestaltung weist der Anschlussstutzen außenseitig eine Tannenbaumstruktur auf. Damit ergibt sich ein besonders sicherer Halt des Schlauchendes auf den Anschlussstutzen, wobei gegebenenfalls sogar die Tannenbaumstruktur geringfügig in eine Innenseite des Schlauchs eindringen kann, um so eine zusätzliche formschlüssige Verbindung herzustellen. Die Verbindungsanordnung ist damit auch für höhere Innendrücke geeignet.

Vorzugsweise ist der Schlauch aus einem Kunststoff ausgebildet. Der Pressring kann ebenfalls aus einem Kunststoff gebildet sein. Damit lässt sich die Verbindungsanordnung sehr kostengünstig herstellen, wobei die gewünschte Elastizität des Pressrings bzw. des Schlauches durch die Wahl des geeigneten Kunststoffes leicht einstellbar ist.

In einer bevorzugten Ausführungsform ist der Schlauch als Wellrohr ausgebildet, wobei insbesondere eine Umfangsfläche des Schlauchendes glattflächig ausgebildet ist. Ein Wellrohr weist eine hohe Biegsamkeit auf und ermöglicht eine sehr flexible Verlegung des Schlauches. Durch eine glattflächige Ausgestaltung der Umfangsfläche am Schlauchende kann dennoch ein großflächiger Kontakt mit dem Pressring und auch mit dem Anschlussstutzen erhalten werden.

In einer alternativen Ausgestaltung weist der Schlauch eine glatte Außenseite auf. Dabei hat der Schlauch über seine gesamte Länge, also auch am Schlauchende, insbesondere einen konstanten Innen- und Außendurchmesser.

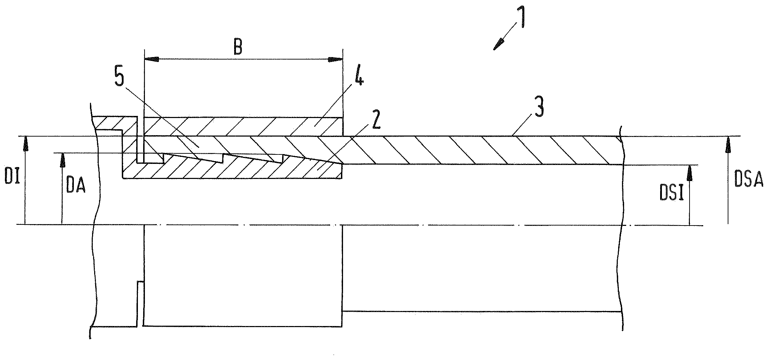

Die Erfindung wird im Folgenden anhand eines bevorzugten Ausführungsbeispiels in Verbindung mit der Zeichnung näher beschrieben. Hierin zeigt:
die einzige Figur eine Verbindungsanordnung in teilgeschnittener Ansicht.

In der Figur ist eine Verbindungsanordnung 1 dargestellt, die einen Anschlussstutzen 2, einen Schlauch 3 sowie einen Pressring 4 umfasst. Der Schlauch 3 ist mit seinem Schlauchende 5 auf den Anschlussstutzen 2 aufgeschoben. Da ein Außendurchmesser DA des Anschlussstutzens größer ist als ein Innendurchmesser DSI des Schlauchs 3 im Bereich seines Schlauchendes 5, ist das Schlauchende 5 durch das Aufschieben auf den Anschlussstutzen 2 radial aufgeweitet worden. Der im Bereich des Anschlussstutzens 2 das Schlauchende 5 umgebende Pressring 4 musste dadurch ebenfalls radial aufgeweitet werden, sodass insgesamt relativ hohe radial nach innen wirkende Spannkräfte auftreten, die das Schlauchende 5 sicher auf dem Anschlussstutzen 2 halten.

Der Außendurchmesser DSA des Schlauchs 3 im Bereich seines Schlauchendes 5 entspricht dabei vor dem Aufschieben auf den Anschlussstutzen 2 im Wesentlichen einem Innendurchmesser DI des Pressrings. Der Pressring 4 kann dadurch relativ einfach auf das Schlauchende 5 aufgeschoben werden, bevor das Schlauchende 5 mit dem Pressring 4 auf den Anschlussstutzen 2 aufgeschoben wird.

Eine Breite B des Pressrings 4 entspricht bei diesem Ausführungsbeispiel einer Eindringtiefe des Anschlussstutzens 2. Damit ergibt sich eine großflächige Kraftübertragung.

Um einen besonders sicheren Halt zu erhalten, ist bei diesem Ausführungsbeispiel eine Außenseite des Anschlussstutzens 2 mit einer Tannenbaumstruktur versehen, die sich teilweise in eine Innenseite des Schlauchendes 5 hineindrückt.

Die Erfindung ist nicht auf das vorbeschriebene Ausführungsbeispiel beschränkt, sondern in vielfältiger Weise abwandelbar. So kann der Schlauch beispielsweise als Wellrohr ausgestaltet sein. Auch ist es nicht unbedingt erforderlich, dass der Anschlussstutzen eine Tannenbaumstruktur aufweist. Alternativ kann der Anschlussstutzen beispielsweise eine glatte Oberfläche oder eine gerillte bzw. geriffelte Oberfläche aufweisen. Auch kann der Pressring eine Breite aufweisen, die geringer ist als die Eindringtiefe des Anschlussstutzens. Dies hängt im Wesentlichen von den zu erfüllenden Anforderungen insbesondere hinsichtlich der Druckfestigkeit ab.

Durch die Erfindung ergibt sich eine besonders einfach herzustellende Verbindungsanordnung für Schläuche, die auch bei größeren Innendurchmessern der Schläuche verwendbar ist. Dennoch ist eine sichere Verbindung des Schlauchendes am Anschlussstutzen erhältlich, die auch einen höheren Innendruck zulässt.

### Bezugszeichenliste

- 1: Verbindungsanordnung
- 2: Anschlussstutzen
- 3: Schlauch
- 4: Pressring
- 5: Schlauchende
- DSA: Außendurchmesser
- DSI: Innendurchmesser
- B: Breite

## Patentansprüche

1. Verbindungsanordnung mit einem Anschlussstutzen (2) und einem Schlauch (3), wobei der Schlauch (3) mit einem Schlauchende (5) auf den Anschlussstutzen (2) aufgeschoben ist, am Schlauchende (5) ein Pressring (4) angeordnet ist, der den Schlauch (3) außenseitig umgibt, wobei der Pressring (4) ausschließlich reibschlüssig auf dem Schlauchende (5) gehalten ist, wobei der Pressring (4) aus einem Kunststoff hergestellt ist, wobei der Innendurchmesser (DI) im unbelasteten Zustand des Pressrings (4) 0-5% kleiner ist als die Summe eines Außendurchmessers (DA) des Anschlussstutzens (2) und einer doppelten Materialdicke des Schlauchs (2) am Schlauchende (5), wobei der Pressring (4) weniger elastisch ausgebildet ist als der Schlauch (3), **dadurch gekennzeichnet, dass** das Schlauchende mit vormontiertem Pressring (4) auf den Anschlussstutzen (2) aufgeschoben ist, wobei die Breite (B) des Pressrings (4) der Eindringtiefe des Anschlussstutzens (2) in den Schlauch (4) entspricht.

2. Verbindungsanordnung nach Anspruch 1, **dadurch gekennzeichnet, dass** der Innendurchmesser (DI) des Pressrings (4) einem Außendurchmesser (DSA) des Schlauchendes (5) vor dem Aufschieben auf dem Schlauchstutzen (2) entspricht, wobei ein Innendurchmesser (DSI) des Schlauchs (3) am Schlauchende (5) kleiner als der maximale Außendurchmesser des Anschlussstutzens (2) ist.

3. Verbindungsanordnung nach einem der vorhergehenden Ansprüche, **dadurch gekennzeichnet, dass** der Anschlussstutzen (2) außenseitig eine Tannenbaumstruktur aufweist.

4. Verbindungsanordnung nach einem der vorhergehenden Ansprüche, **dadurch gekennzeichnet, dass** der Schlauch (3) aus einem Kunststoff gebildet ist.

5. Verbindungsanordnung nach einem der vorhergehenden Ansprüche, **dadurch gekennzeichnet, dass** der Schlauch (3) als Wellrohr ausgebildet ist, wobei insbesondere eine Umfangsfläche des Schlauchendes glattflächig ausgebildet ist.

6. Verbindungsanordnung nach einem der Ansprüche 1 bis 4, **dadurch gekennzeichnet, dass** der Schlauch (3) eine glatte Außenseite aufweist.

## Claims

1. Connecting arrangement comprising a connecting piece (2) and a hose (3), wherein the hose (3) is pushed with one hose end (5) onto the connecting piece (2), wherein a press ring (4) is arranged on the hose end (5), which surrounds the hose (3) on the outside, wherein the press ring (4) is retained on the hose end (5) by a friction fit only, wherein the press ring (4) is made of a plastic material, wherein the inner diameter (DI) in the unloaded state of the press ring (4) is 0-5% smaller than the sum of an outer diameter (DA) of the connecting piece (2) and a doubled material thickness of the hose (2) at the hose end (5), wherein the press ring (4) is less elastic than the hose (3), **characterised in that** the hose end with preassembled press ring (4) is pushed onto the connecting piece (2), wherein the width (B) of the press ring (4) corresponds to the depth of penetration of the connecting piece (2) into the hose (4).

2. Connecting arrangement according to claim 1, **characterised in that** the inner diameter (DI) of the press ring (4) corresponds to an outer diameter (DSA) of the hose end (5) before being pushed onto the hose connector (2), wherein an inner diameter (DSI) of the hose (3) at the hose end (5) is smaller than the maximum outer diameter of the connecting piece (2).

3. Connecting arrangement according to any of the preceding claims, **characterised in that** the connecting piece (2) has an external fir tree structure.

4. Connecting arrangement according to any of the preceding claims, **characterised in that** the hose (3) is made of a plastic material.

5. Connecting arrangement according to any of the preceding claims, **characterised in that** the hose (3) is formed as a corrugated tube, wherein in particular a circumferential surface of the hose end is smooth.

6. Connecting arrangement according to any of claims 1 to 4, **characterised in that** the hose (3) has a flat external face.

## Revendications

1. Ensemble de liaison avec une tubulure de raccordement (2) et un tuyau flexible (3), dans lequel le tuyau flexible (3) est enfilé sur la tubulure de raccordement (2) avec une extrémité de tuyau flexible (5), un anneau de serrage (4) est disposé sur l'extrémité de tuyau flexible (5), qui entoure le tuyau flexible (3) à l'extérieur, dans lequel l'anneau de serrage (4) est maintenu exclusivement par friction sur l'extrémité de tuyau flexible (5), dans lequel l'anneau de serrage (4) est fabriqué en une matière plastique, dans lequel le diamètre intérieur (DI) à l'état non chargé de l'anneau de serrage (4) est inférieur de 0 à 5 % à la somme d'un diamètre extérieur (DA) de la tubulure de raccordement (2) et de deux fois l'épaisseur de matériau du tuyau flexible (2) à l'extrémité de tuyau flexible (5), dans lequel l'anneau de serrage (4) est réalisé moins élastique que le tuyau flexible (3), **caractérisé en ce que** l'extrémité de tuyau flexible avec l'anneau de serrage prémonté (4) est enfilée sur la tubulure de raccordement (2), la largeur (B) de l'anneau de serrage (4) correspondant à la profondeur de pénétration de la tubulure de raccordement (2) dans le tuyau flexible (4).

2. Ensemble de liaison selon la revendication 1, **caractérisé en ce que** le diamètre intérieur (DI) de l'anneau de serrage (4) correspond à un diamètre extérieur (DSA) de l'extrémité de tuyau flexible (5) avant d'être enfilé sur le raccord de tuyau flexible (2), dans lequel un diamètre intérieur (DSI) du tuyau flexible (3) à l'extrémité de tuyau flexible (5) est inférieur au diamètre extérieur maximum de la tubulure de raccordement (2).

3. Ensemble de liaison selon l'une quelconque des revendications précédentes, **caractérisé en ce que** la tubulure de raccordement (2) présente une structure pyramidale à l'extérieur.

4. Ensemble de liaison selon l'une quelconque des revendications précédentes, **caractérisé en ce que** le tuyau flexible (3) est formé d'une matière plastique.

5. Ensemble de liaison selon l'une quelconque des revendications précédentes, **caractérisé en ce que** le tuyau flexible (3) est réalisé sous forme de tube ondulé, une surface périphérique de l'extrémité de tuyau flexible étant en particulier réalisée avec une surface lisse.

6. Ensemble de liaison selon l'une quelconque des revendications 1 à 4, **caractérisé en ce que**
le tuyau flexible (3) présente un côté extérieur lisse.
